# EUROPÄISCHE PATENTSCHRIFT

(11) **EP 2 622 215 B1**
(45) Veröffentlichungstag und Bekanntmachung des Hinweises auf die Patenterteilung: **15.03.2017**
(21) Anmeldenummer: 11757168.7
(22) Anmeldetag: 31.08.2011
(51) Int. Cl.: F03D 7/02, B60T 8/50, B60T 13/66

(54) **HYDRAULISCHE BREMSEINRICHTUNG FÜR EINE WINDENERGIEANLAGE**
HYDRAULIC BRAKE DEVICE FOR A WIND TURBINE
DISPOSITIF DE FREINAGE HYDRAULIQUE POUR UNE INSTALLATION D'ÉNERGIE ÉOLIENNE

(30) Priorität: 30.09.2010 DE 102010041824
(43) Veröffentlichungstag der Anmeldung: 07.08.2013
(73) Patentinhaber: Senvion GmbH, 22297 Hamburg (DE)
(72) Erfinder: WARFEN, Karsten, 23795 Söhren (DE)
(74) Vertreter: Seemann & Partner Patentanwälte mbB
(86) Internationale Anmeldenummer: PCT/EP2011/004375
(87) Internationale Veröffentlichungsnummer: WO 2012/041433

(56) Entgegenhaltungen:
- EP-A1- 1 389 686
- EP-A2- 1 959 131
- WO-A1-03/080414
- DE-A1-102004 057 522
- DE-U1-202007 001 765

## Beschreibung

Die Erfindung betrifft eine hydraulische Ansteuereinrichtung für eine Bremseinrichtung einer Windenergieanlage, umfassend eine hydraulische Steuerleitung, die von einem Anschluss für einen hydraulischen Systemkreislauf einer Windenergieanlage bis zu einem Anschluss für wenigstens einen Bremszylinder einer Bremseinrichtung verläuft, wobei in der Steuerleitung wenigstens eine Drossel oder Blende angeordnet ist. Die Erfindung betrifft weiter eine entsprechende Bremseinrichtung, eine Windenergieanlage sowie ein Verfahren zum Bremsen einer Welle einer Windenergieanlage.

Die Erfindung betrifft das Gebiet von Rotorbremsen von Windenergieanlagen. Diese sind üblicherweise so ausgestattet, dass an einer schnellen Welle eines Triebstrangs, die durch ein Getriebe von der Rotorwelle angetrieben wird, eine Bremsscheibe angeordnet ist, die mittels Bremsbacken von hydraulisch angesteuerten Bremszylindern gebremst werden kann.

Die Bremse wird aus dem Betrieb heraus betätigt, um den Rotor im Falle bestimmter schwerer Störungen oder bei Betätigung des Notstop-Schalters stillzusetzen. Auch für Wartungs- und Reparaturarbeiten ist das Festbremsen des Rotors unerlässlich.

Das Bremsen geschieht bei aktiven Bremssystemen dadurch, dass Bremszylinder mit einem Druck beaufschlagt werden und dadurch die Bremszylinder ausgefahren werden, bis die Bremsbacken der Bremszylinder an der Bremsscheibe anliegen und diese abbremsen. Um zu verhindern, dass beim Auslösen der Rotorbremse schlagartig der volle Systemdruck, der um die 100 Bar betragen kann, an der Bremse anliegt, wird in der Druckleitung üblicherweise eine Drossel eingesetzt. Dadurch steigt der Druck an der Bremse nur langsam an und Schwingungen im System, die durch die plötzliche Drehzahlveränderung aufgrund einer starken Bremsung entstehen, werden vermieden.

Bei dieser Betriebsführung der Rotorbremse ergibt sich eine Totzeit, die dadurch entsteht, dass zunächst der Bremsspalt zwischen den Bremsbacken und der Bremsscheibe überwunden werden muss. Erst nach der Totzeit, wenn die Bremsbacken die Bremsscheibe kontaktieren, wird ein Bremsmoment an der Rotorbremsscheibe aufgebaut.

Die Totzeit wird auch durch zunehmenden Verschleiß erhöht. Hierzu gibt es Bremssysteme, die zumindest den Verschleiß über eine Bremsbelagnachführung kompensieren und die Beläge auf einen definierten Abstand zur Bremsscheibe einstellen. Der Weg, der überwunden werden muss, bevor die Bremsscheibe durch die Bremsbeläge kontaktiert wird, wird hiermit allerdings nicht verkürzt.

Die Totzeit, also die Dauer von dem Moment an, an dem die Bremse angefordert wird, bis sie greift, beträgt, abhängig von der Größe des Bremsspaltes und von dem Typ der Anlage, zwischen ca. 0,3 und 7 Sekunden, unter Umständen bis zu 10 Sekunden. Erst nach dieser Zeit wird ein nennenswertes Bremsmoment aufgebaut.

Die Reaktion der Bremsen bei Nothaltbetätigung ist daher relativ träge. Außerdem gibt es in Anlagen, in denen die Bremsen auch zur Drehzahlbegrenzung oder zur Drehzahlreduktion in der Lastenauslegung Berücksichtigung finden, ein Risiko, dass sich die Bremsen langsamer verhalten als in den Auslegungsberechnungen angenommen. Das kann im Ergebnis zu unerwarteten Lasten an der Windenergieanlage führen.

Aus EP 1 389 686 A1 ist ein elektrohydraulisches Bremsmodul bekannt, das mittels einer Kombination aus einem durch einen Proportionalmagneten betätigbaren Druckbegrenzungs-Regelventil und einem betätigbaren Umschaltventil eine proportionale Bremssteuerung ermöglicht, die zumindest bei einem Netzabfall die Generator-Soll-Drehzahl hält. Bei einem Netzausfall wird nach Maßgabe der vorhandenen Drehzahl Druckmittel über das Umschaltventil in eine Arbeitsleitung gespeist und/oder über das Regelventil zu einem Tank, um die Bremswirkung proportional zu modulieren, wobei das Proportional-Druckbegrenzungs-Regelventil die Ablasssteuerung so vornimmt, dass die Soll-Drehzahl des Generator gehalten wird.

In DE 10 2004 057 522 A1 ist eine Bremseinrichtung für eine Windenergieanlage offenbart, bei der eine Bremsventilanordnung ein 3/2-Wege-Sitzventil umfasst, über das ein Druckraum eines hydraulisch betätigten Bremszylinders zum Bremsen mit einer Druckmittelquelle und zum Lüften der Bremse mit einer Druckmittelsenke verbunden ist. Das Wegesitzventil ermöglicht eine leckagefreie Absperrung der Bremszylinder.

EP 1 959 131 A2 betrifft eine Windenergieanlage mit einer hydraulisch betätigten Rotorbremse für einen Triebstrang, die mindestens einen hydraulisch betätigten Bremszylinder aufweist, dessen Bremsmoment mit steigendem Hydraulikdruck zunimmt, wobei bei Betätigung der Bremse ein Volumen an Hydraulikflüssigkeit durch ein Druckminderungsventil im Bremszylinder und in dessen Druckleitung eingespannt ist, wobei ein Speicher mit Hydraulikflüssigkeit vorgesehen ist, der mit der Druckleitung verbunden ist. Es sind hierbei zwei Druckminderungsventile vorgesehen, von denen eines einen anliegenden Systemdruck auf den Bremsdruck reduziert und das andere den anliegenden Systemdruck auf einen Haltedruck reduziert.

Ebenfalls sind aus WO 03/080414 A1 und DE 20 2007 001 765 U1 Ansteuereinrichtungen für hydraulisch betätigte Rotorbremsen von Windenergieanlagen bekannt.

Der vorliegenden Erfindung liegt, ausgehend von diesem Stand der Technik, die Aufgabe zugrunde, die hydraulische Bremsung eines Triebstrangs einer Windenergieanlage mit möglichst geringer Totzeit bei gleichzeitiger minimaler struktureller Belastung der Windenergieanlage zu ermöglichen.

Diese Aufgabe wird durch eine hydraulische Ansteuereinrichtung für eine Bremseinrichtung einer Windenergieanlage gelöst, umfassend eine hydraulische Steuerleitung, die von einem Anschluss für einen hydraulischen Systemkreislauf einer Windenergieanlage bis zu einem Anschluss für wenigstens einen Bremszylinder einer Bremseinrichtung verläuft, wobei in der Steuerleitung wenigstens eine Drossel oder Blende angeordnet ist, die dadurch weitergebildet ist, dass wenigstens eine Zweigleitung mit einem Druckregelglied vorgesehen ist, die die Drossel oder Blende überbrückend in Druckaufbaurichtung auf den wenigstens einen Bremszylinder zu stromaufwärts der Drossel oder Blende von der Steuerleitung abzweigt und stromabwärts der Drossel oder Blende wieder in die Steuerleitung einmündet, wobei das bei niedrigem ausgangsseitig anliegendem Druck geöffnete Druckregelglied sich schließt, wenn der ausgangsseitig des Druckregelglieds am Druckregelglied in dem stromabwärtigen Teil der Zweigleitung anliegende Druck einen voreingestellten oder voreinstellbaren Schließdruck übersteigt, wobei das zur Drossel oder zur Blende parallel geschaltete Druckregelglied nach Anlegen eines Bremsbefehls bis zum Erlangen eines Schließdrucks einen erheblich höheren Volumenstrom an Hydraulikflüssigkeit zum Druckaufbau am Bremszylinder als die Drossel oder Blende zulässt.

Erfindungsgemäß wird unter der Druckaufbaurichtung diejenige Richtung verstanden, in der der Druck vermittelt und aufgebaut wird. Das bedeutet im vorliegenden Fall, dass bezüglich der Steuerleitung und der darin angeordneten hydraulischen Stellglieder der Systemkreislauf stromaufwärts ist und der wenigstens eine Bremszylinder stromabwärts. Die Druckaufbaurichtung verläuft somit in Richtung auf den Bremszylinder zu, an dem ein Bremsdruck aufgebaut werden soll.

Die Erfindung beruht auf dem Grundgedanken, dass parallel zur vorhandenen Blende oder Drossel ein Druckregelglied geschaltet wird, das nach Anlegen eines Bremsbefehls bis zum Erlangen eines Schließdrucks einen erheblich höheren Volumenstrom an Hydraulikflüssigkeit zum Druckaufbau am Bremszylinder als die Blende oder Drossel zulässt und somit einen deutlich schnelleren Vorschub der Bremsbeläge am Bremszylinder in Richtung auf die Bremsscheibe hin erreicht. Dadurch wird der Bremsspalt schneller überwunden und die Totzeit verringert. Ab dem Schließdruck des Druckregelglieds wird dieses unwirksam, d.h. der Volumenstrom durch das Druckregelglied wird vollständig unterbrochen, und die ursprüngliche Kennlinie des Bremsdruckaufbaus über die Drossel bzw. die Blende wird wieder eingehalten. Diese war bereits so gestaltet, dass die Belastungsgrenzen der Windenergieanlage und des Getriebes beim Bremsen des Triebstrangs nicht überschritten werden.

Typische Schließdrücke sind zwischen 10 und 30 bar, insbesondere bei ca. 15 bar. Die genaue Auswahl hängt vom Typ und von der Auslegung der Windenergieanlage und ihrer Komponenten ab.

Die erfindungsgemäße Ansteuereinrichtung hat den Vorteil, dass die Bremse schnell ein Anfangsbremsmoment erreicht und die Totzeit reduziert ist und dass danach die bekannte Bremskennlinie mit verringerter Momentzunahme über die vorhandene Drossel oder Blende eingehalten wird. Die entsprechende Ansteuereinrichtung ist aufgrund der bekannten und zuverlässigen Komponenten günstiger als ein Belagnachführungssystem.

Außerdem ist keine Erweiterung der Steuerelektronik erforderlich, wenn die zusätzliche Komponente passiv, d.h. ohne elektronische Steuerung, ausgestaltet ist. Dadurch bleibt auch die Topologie der Ansteuereinrichtung einfach und robust, da aus Sicht der Elektrotechnik nur passive Bauteile zum Einsatz kommen. Dies erhöht auch die Servicefreundlichkeit der erfindungsgemäßen Ansteuervorrichtung. Sowohl bei einer Nothaltbetätigung als auch bei einem Anlagenstop für Servicearbeiten ist damit ein schnellerer Beginn des Bremsvorgangs bei gleichzeitiger Einhaltung der zulässigen Lasten der Windenergieanlage gegeben. Es entfällt auch die Notwendigkeit eines zusätzlichen Serviceschalters oder Tasters für ein "schnelles" Bremsen.

In einer vorteilhaften Ausbildung der Erfindung ist vorgesehen, dass mehrere Zweigleitungen mit mehreren Druckregelgliedern vorgesehen sind, die auf jeweils gleiche oder verschiedene Schließdrücke voreingestellt oder einstellbar sind. Bei gleichen eingestellten Schließdrücken wird der Volumenstrom in der Niedrigdruckphase weiter erhöht, wodurch der Bremsspalt noch schneller überwunden wird und die Totzeit weiter verringert wird. Bei verschiedenen Schließdrücken der verschiedenen Druckregelglieder kann die Druckverlaufskurve auch im Niedrigdruckbereich so moduliert werden, dass auftretende Lasten beim ersten Fassen der Bremse innerhalb der Sicherheitsparameter der Windenergieanlage bleiben.

In einer bevorzugten Ausführungsform ist das wenigstens eine Druckregelglied als Druckregelventil oder als gesteuertes Mehrwegeventil, insbesondere 2/2-Wege-Ventil, dessen Öffnungszustand sich bei Über- oder Unterschreiten des Schließdrucks verändert, als Druckminderungsventil oder als Proportionalventil ausgebildet, dessen Öffnung in Abhängigkeit des ausgangsseitig am Druckregelglied anliegenden Drucks über einen voreingestellten oder einstellbaren Druckbereich bis zum Erreichen des Schließdrucks geschlossen wird. Die genannten hydraulischen Komponenten eignen sich alle dafür, bei niedrigem ausgangsseitig anliegendem Druck einen hohen Volumenstrom an Hydraulikflüssigkeit passieren zu lassen und bei Überschreiten des Schließdrucks diesen Volumenstrom zu unterbinden.

Ein Druckregelventil ist dabei ein passives Bauelement, das bei niedrigem ausgangsseitigen Druck die Hydraulikflüssigkeit durchlässt und bei Überschreiten des Schließdrucks den Durchgang verschließt. Ein gesteuertes 2/2-Wege-Ventil erfordert eine Steuerelektronik und einen Druckmesser in der Zweigleitung stromabwärts des Ventils. Ein Druckminderungsventil schließt den Volumenstrom proportional zum ausgangsseitig herrschenden Druck und ist vollständig geschlossen, wenn der ausgangsseitige Druck den Schließdruck übersteigt. Auch ein Proportionalventil kann mit verschiedenen Steuerkurven angesteuert werden und über einen Druckbereich von einer vollständigen Offenstellung zu einer vollständigen Geschlossenstellung gesteuert werden, wobei der Volumenstrom über die variabel veränderliche Öffnungsgröße steuerbar ist. Die verschiedenen Ausführungsvarianten haben ihre Vorteile einerseits bei der Einfachheit und Robustheit der passiven Stellglieder und andererseits bei der Variabilität und Steuerbarkeit der steuerbaren Stellglieder.

Vorzugsweise ist die Steuerleitung stromaufwärts der stromaufwärtigen Abzweigung der Zweigleitung mittels eines steuerbaren Sperrglieds absperrbar, insbesondere mittels eines Sperrventils oder Mehrwegeventils, insbesondere 2/2-Wege-Ventils. Ein Steuersignal, mit dem eine Bremsung eingeleitet wird, kann dann dazu führen, dass eine Sperrung durch das Sperrglied aufgehoben wird und die hydraulische Ansteuereinrichtung und nachfolgend die Bremszylinder mit Hydraulikflüssigkeit beaufschlagt werden, um einen Bremsdruck aufzubauen.

Wenn vorzugsweise stromabwärts der stromabwärtigen Verbindung der Zweigleitung mit der Steuerleitung eine Entlastungsleitung mit einem Entlastungsglied abzweigt, wobei das Entlastungsglied insbesondere als steuerbares Sperrventil, als steuerbares Mehrwegeventil, insbesondere 2/2-Wege-Ventil, als Druckbegrenzungsventil, als Überdruckventil oder als Sicherheitsventil ausgebildet ist, kann die hydraulische Ansteuereinrichtung bei Auftreten von hohen Drücken in den Leitungen, die die Sicherheitsdrücke überschreiten, entlastet werden.

Alternativ kann in einer vorteilhaften Ausführung die Sicherheit der hydraulischen Ansteuereinrichtung gewährleistet werden, wenn in der Steuerleitung stromaufwärts der stromaufwärtigen Abzweigung der Zweigleitung ein Mehrwegeventil, insbesondere 3/2-WegeVentil, angeordnet ist, mittels dessen der stromabwärtige Teil der Steuerleitung schaltbar wechselweise mit dem Anschluss für einen hydraulischen Systemkreislauf und mit einer Entlastungsleitung verbindbar ist. Hierfür ist es vorteilhaft, wenn die Rückströmung durch die Drossel oder die Blende schnell genug erfolgt, um den stromabwärtigen Teil der Ansteuereinrichtung effektiv zu entlasten.

Eine vorteilhafte Verbesserung der Bremskennlinie wird dadurch erreicht, wenn stromabwärts der stromabwärtigen Verbindung der Zweigleitung mit der Steuerleitung eine Stichleitung von der Steuerleitung zu einem Speicher abzweigt, der insbesondere eine Gasspannvorrichtung aufweist, wobei der Speicher befüllt oder entleert wird, solange der in der Stichleitung am Speicher anliegende Druck einen Mindestspeicherdruck überschreitet und der Speicher inaktiv ist, wenn der Mindestspeicherdruck in der Stichleitung unterschritten wird. Oberhalb des Mindestspeicherdrucks nimmt der Speicher Hydraulikflüssigkeit auf, wodurch die Kennlinie weiter abgeflacht wird und die beim Bremsen auftretenden Lasten weiter reduziert werden. Der Speicher hat den zusätzlichen Effekt, dass mögliche Druckschwankungen im System ausgeglichen werden.

Durch sinnvolle Auswahl des Mindestspeicherdrucks im Verhältnis zum Schließdruck des als Druckregelglied ausgebildeten Druckregelventils kann das Verhalten des Systems beeinflusst werden. So kann ein weiches Anlegen der Bremsbeläge erreicht werden, indem der Mindestspeicherdruck des Speichers auf einen kleineren Wert eingestellt wird als der Druck des Druckregelventils. Ein schnelles Anlegen der Bremsbeläge wird erreicht, indem der Mindestspeicherdruck des Speichers auf einen größeren Wert eingestellt wird als der Druck des Druckregelventils. Der Mindestspeicherdruck des Speichers kann jedoch auch auf den Druck des Druckregelventils bzw. des Druckregelglieds eingestellt werden.

Ein Speicher mit Gasspannvorrichtung hat eine Membran, die das Volumen des Speichers in zwei Hälften unterteilt. In einem Bereich befindet sich eine komprimierbare Gasfüllung. So kann der Speicher bei Druckzunahme und Druckabnahme Hydraulikflüssigkeit aufnehmen bzw. abgeben. Alternativ sind auch Blasenspeicher oder Kolbenspeicher erfindungsgemäß einsetzbar.

Vorzugsweise ist der Schließdruck des Druckregeventils größer oder kleiner als oder gleich dem Mindestspeicherdruck, insbesondere des Speichers, voreingestellt oder einstellbar, insbesondere in Abhängigkeit voneinander mit einer vorgegebenen oder vorgebbaren Druckdifferenz. Damit ist die Bremscharakteristik als weiches oder hartes Bremsen einstellbar oder voreingestellt und insbesondere an den Typ der Windenergieanlage leicht anpassbar.

Falls das Druckregelglied, das parallel zu der Drossel oder Blende geschaltet ist, ausgangsseitig nicht für sehr hohe Drücke ausgelegt ist, ist vorzugsweise zu dessen Schutz vorgesehen, dass die Zweigleitung stromabwärts des Druckregelglieds ein Schutzglied in Form eines in Druckaufbaurichtung öffnenden Rückschlagventils oder eines steuerbaren Sperrglieds aufweist, wobei das Schutzglied den Durchfluss sperrt, wenn am stromabwärtigen Ausgang des Druckregelglieds ein Druck anliegt, der einen Sicherheitsdruck, für den das Lastdruckregelglied ausgelegt ist, überschreitet, oder wenn der stromabwärts des Schutzglieds herrschende Druck den stromaufwärts des Schutzglieds herrschenden Druck überschreitet. Dadurch wird sichergestellt, dass ein für das Druckregelglied schädlicher hoher Druck, der durch nachströmende Hydraulikflüssigkeit durch die Drossel oder Blende weiter erhöht wird, nicht an die Ausgangsseite des beispielsweise als Druckregelventil ausgebildeten Druckregelglieds angelegt wird.

Um auch bei einer gewissen Undichtigkeit eines solchen Schutzgliedes sicherzustellen, dass das Druckregelglied nicht beschädigt wird, ist in einer vorteilhaften Weiterbildung vorgesehen, dass von der Zweigleitung zwischen dem Druckregelglied und dem Schutzglied eine Zweigentlastungsleitung mit einem Druckbegrenzungsglied mit voreingestelltem oder einstellbarem Grenzdruck abzweigt, wobei das Druckbegrenzungsglied insbesondere als federvorbelastetes oder gesteuertes in Druckentlastungsrichtung sich öffnendes Rückschlagventil, als voreingestelltes, einstellbares oder steuerbares Druckbegrenzungsventil, als Überdruck- oder Sicherheitsventil oder als steuerbares Sperrventil oder Mehrwegeventil, insbesondere 2/2-Wege-Ventil, ausgebildet ist. Auf diese Weise kann ein schädlicher Überdruck von der Ausgangsseite des Druckregelglieds abgeleitet werden, um dieses zu entlasten.

Vorzugsweise ist ein entgegen der Druckaufbaurichtung öffnendes Rückschlagventil vorgesehen, das die Drossel und das Druckregelventil überbrückt. In diesem Fall kann ein Überdruck auf der Seite des Bremszylinders gegenüber dem Systemdruck über das Druckregelventil abgebaut werden. Dies ist insbesondere vorteilhaft in Verbindung mit einem steuerbaren Mehrwegeventil, mittels dessen stromaufwärts der Abzweigung zur Drossel und zum Druckregelventil eine Verbindung zu einer Entlastungsleitung herstellbar ist. Über das Rückschlagventil erfolgt eine sehr schnelle und ungedrosselte Entlastung. Die Funktion des Rückschlagventils kann auch in das Druckregelventil implementiert sein.

Die der Erfindung zugrunde liegende Aufgabe wird auch gelöst durch eine hydraulische Bremseinrichtung einer Windenergieanlage mit wenigstens einem hydraulisch betätigbaren Bremszylinder und einer zuvor beschriebenen erfindungsgemäßen hydraulischen Ansteuereinrichtung sowie durch eine Windenergieanlage mit einer erfindungsgemäßen hydraulischen Bremseinrichtung. Beide weisen die Merkmale, Eigenschaften und Vorteile der zuvor beschriebenen hydraulischen Ansteuereinrichtung auf.

Die der Erfindung zugrunde liegende Aufgabe wird auch durch ein Verfahren zum Bremsen einer Welle einer Windenergieanlage mittels wenigstens eines Bremszylinders, der bei Anlegen eines hydraulischen Drucks von einer Offenstellung in eine Bremsstellung bringbar ist, gelöst, wobei bei Einleiten eines Bremsvorganges und niedrigem am Bremszylinder anliegenden hydraulischen Druck der Druckaufbau am Bremszylinder in einer erfindungsgemäßen oben beschriebenen hydraulischen Ansteuereinrichtung mit einem hohen Volumenstrom an Hydraulikflüssigkeit über eine Drossel oder Blende und ein zur Drossel oder Blende der Ansteuereinrichtung parallel geschaltetes Druckregelglied der Ansteuereinrichtung erfolgt, bis ein Schließdruck erreicht ist, wobei nach Überschreiten des Schließdrucks das Druckregelglied geschlossen wird und der Druckaufbau am Bremszylinder bis zum Erreichen eines maximalen Bremsdrucks mit einen niedrigeren oder gedrosselten Volumenstrom nur durch die Drossel oder Blende erfolgt. Im Rahmen der Erfindung wird unter einer Offenstellung des Bremszylinders in diesem Zusammenhang ein Zustand verstanden, in dem die Bremse gelöst ist.

Bei der erfindungsgemäßen hydraulischen Ansteuereinrichtung sorgt der zunächst wirkende hohe Volumenstrom an Hydraulikflüssigkeit dafür, dass der Bremsspalt schnell überwunden und die Totzeit minimiert wird, während die Reduzierung des Volumenstroms durch die bereits vorhandene Drossel oder Blende dafür sorgt, dass nach Schließen des Druckregelglieds die bekannte Bremskennlinie eingehalten wird und es nicht zu Überlastungen der Windenergieanlage kommt.

Vorteilhafterweise ist der Schließdruck so gewählt, dass ein Bremsspalt zwischen einer Bremsbacke des Bremszylinders und einer Bremsscheibe überwunden ist, wenn der Schließdruck erreicht ist, wobei ein bei Erreichen des Schließdrucks erreichtes Bremsmoment und die dadurch erzielte Abbremsung eines Rotors der Windenergieanlage innerhalb vorgegebener Belastungsgrenzen der Windenergieanlage liegen. In vorteilhaften Weiterbildungen ist vorgesehen, die Bremskennlinie im Niederdruckbereich zu modulieren, indem eine Parallelschaltung von mehreren Zweigleitungen und Druckregelgliedern mit verschiedenen Schließdrücken eingerichtet wird. Im oberen Druckbereich wird vorteilhafterweise die Bremskennlinie abgeflacht, indem ein Speicher, insbesondere mit Gasspannvorrichtung, stromabwärts einer Drossel vorgesehen ist.

In einer bevorzugten Weiterbildung ist vorgesehen, dass der Schließdruck des als Druckregelglied ausgebildeten Druckregelventils größer oder kleiner als oder gleich einem Mindestspeicherdruck, insbesondere des Speichers, voreingestellt wird oder eingestellt ist, insbesondere in Abhängigkeit voneinander mit einer vorgegebenen oder vorgebbaren Druckdifferenz.

Die im Zusammenhang mit den verschiedenen Erfindungsgegenständen, d.h. der Ansteuereinrichtung, der Bremseinrichtung, der Windenergieanlage und dem Verfahren, genannten Merkmale, Eigenschaften und Vorteile gelten uneingeschränkt auch für die jeweils anderen Erfindungsgegenstände.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine diagrammatische Darstellung einer erfindungsgemäßen hydraulischen Ansteuereinrichtung,
- Fig. 2: eine diagrammatische Darstellung einer weiteren Variante einer erfindungsgemäßen Ansteuereinrichtung,
- Fig. 3: eine diagrammatische Darstellung eines Details einer alternativen erfindungsgemäßen Ansteuereinrichtung,
- Fig. 4: eine schematische Darstellung des zeitlichen Verlaufs des Volumenstroms mit einer erfindungsgemäßen Ansteuereinrichtung und
- Fig. 5: eine schematische Darstellung des zeitlichen Verlaufs des Bremsdrucks mit einer erfindungsgemäßen Ansteuereinrichtung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

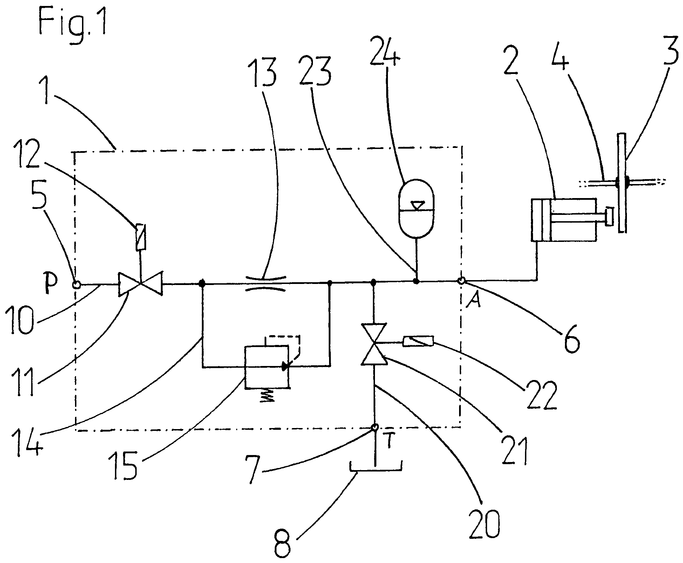

In Fig. 1 ist eine Ausführungsform einer erfindungsgemäßen hydraulischen Ansteuereinrichtung 1 schematisch diagrammatisch dargestellt. Die Ansteuereinrichtung 1 ist mittels einer strichpunktierten Linie als funktionelle Einheit dargestellt. Die darin gezeigten Komponenten müssen allerdings nicht in einem gemeinsamen Gehäuse untergebracht sein.

Die hydraulische Ansteuereinrichtung 1 ist an einem mit dem Buchstaben P gekennzeichneten, nicht näher dargestellten, hydraulischen Systemkreislauf mit einem Anschluss 5 verbunden oder verbindbar, von dem aus eine Steuerleitung 10 bis zu einem Anschluss 6 ("A") für hydraulische Bremszylinder 2 verläuft. Ein solcher hydraulischer Bremszylinder 2 ist ebenfalls dargestellt. Eine Bremsbacke des Bremszylinders 2 greift an eine Bremsscheibe 3 an einer Welle 4 eines Triebstrangs einer Windenergieanlage an. Zwischen der Bremsbacke des Bremszylinders 2 und der Bremsscheibe 3 ist ein Bremsspalt geöffnet. Der Bremszylinder 2 ist somit in einer Stellung, in der die Welle 4 und der Triebstrang ungebremst rotieren können.

In der hydraulischen Ansteuereinrichtung ist in der Steuerleitung 10 stromabwärts des Anschlusses 5 zunächst ein Sperrventil 11, das mittels einer Steuerspule 12 bedienbar ist, angeordnet. Mittels des Sperrventils 11 ist im normalen Betriebszustand der Windenergieanlage der weitere Verlauf der Steuerleitung 10 und der Bremszylinder 2 von dem Systemkreislauf P abgesperrt und somit drucklos. Sobald ein Bremssignal generiert wird, wird mittels der Steuerspule 12 das Sperrventil 11 auf "Durchleiten" gestellt. Das Sperrventil 11 ist üblicherweise auch als 2/2-Wege-Ventil ausgebildet.

Wenn das Sperrventil 11 offengestellt ist, strömt Hydraulikflüssigkeit durch das Sperrventil 11 in den stromabwärtigen Teil der Steuerleitung 10 und trifft auf eine Verzweigung, in der eine Zweigleitung 14 von der Steuerleitung 10 abzweigt.

In der Steuerleitung 10 selber ist stromabwärts der Verzweigung eine Drossel 13 angeordnet, die auch durch eine Blende ersetzt sein kann, und die den Volumenstrom der Hydraulikflüssigkeit begrenzt bzw. drosselt, so dass eine flache Bremskennlinie für den Bremszylinder 2 eingestellt ist. Hierdurch wird vermieden, dass beim Bremsen übermäßige Lasten auf die Windenergieanlage und ihre Komponenten einwirken. Die Zweigleitung 14 mündet stromabwärts der Drossel 13 wieder in die Steuerleitung 10 ein.

In der Zweigleitung 14 ist ein Druckregelventil 15 angeordnet und somit zur Drossel 13 parallel geschaltet. Das Druckregelventil 15 ist federvorgespannt und leitet im unbelasteten Zustand die Hydraulikflüssigkeit durch. Der Querschnitt der Öffnung in dem Druckregelventil 15 ist deutlich größer als der Querschnitt der Drossel 13, so dass bei niedrigem Druck, d.h. im unbelasteten Zustand des Druckregelventils 15, ein großer Volumenstrom als Summe der Volumenströme durch das Druckregelventil 15 und die Drossel 13 zum Bremszylinder 2 gelangen kann. Dadurch wird der Bremsspalt schnell überwunden und die Totzeit minimiert. Das Druckregelventil wird über eine gestrichelt dargestellte Steuerleitung mit dem ausgangsseitig anliegenden Druck beaufschlagt, so dass bei Überschreiten eines Schließdrucks das Druckregelventil 15 in Schließstellung gebracht wird. Wenn dies der Fall ist, ist nur noch die Drossel 13 in der Steuerleitung 10 offen, so dass der Volumenstrom verringert ist und das weitere Anziehen der Bremse langsamer verläuft als zuvor. Hierdurch werden Spitzen in der Belastung der Windenergieanlage und des Getriebes vermieden.

Stromabwärts des Einmündungspunktes der Zweigleitung 14 in die Steuerleitung 10 zweigt eine erste Entlastungsleitung 20 von der Steuerleitung 10 ab. In dem in Fig. 1 dargestellten Ausführungsbeispiel ist in die erste Entlastungsleitung 20 ein Sperrventil 21, das über eine Steuerspule 22 angesteuert wird, angeordnet. Die erste Entlastungsleitung 20 mündet in einem Anschluss 7 für einen Tank 8, der auch mit "T" gekennzeichnet ist.

Ebenfalls stromabwärts des Einmündungspunktes der Zweigleitung 14 in die Steuerleitung 10 ist eine Stichleitung 23 zu einem Speicher 24 mit einer Gasspannvorrichtung ausgebildet. Der Speicher 24 wirkt so, dass bei Überschreiten eines Mindestspeicherdrucks die Vorspannung der Gasspannvorrichtung überwunden wird und Hydraulikflüssigkeit in den Speicher 24 eindringen kann. Bei Überschreiten des Mindestspeicherdrucks in der Steuerleitung 10 bzw. der Stichleitung 23 dient der Speicher 24 dann als Puffer, wodurch einerseits die Bremskennlinie abgeflacht wird und andererseits Druckschwankungen in der Steuerleitung 10 ausgeglichen werden.

Die Anschlüsse 5, 6 und 7 zum Systemkreislauf P, Bremskreislauf A und Entlastungstank T sind im Rahmen der Erfindung beliebige Anschlüsse, die beispielsweise einen Auslassstutzen in einen Tank darstellen können, eine Verbindung einer Leitung zu einem Bremszylinder oder eine Verbindungsleitung zum hydraulischen Systemkreislauf. Der Begriff "Anschluss" ist erfindungsgemäß somit breit zu interpretieren.

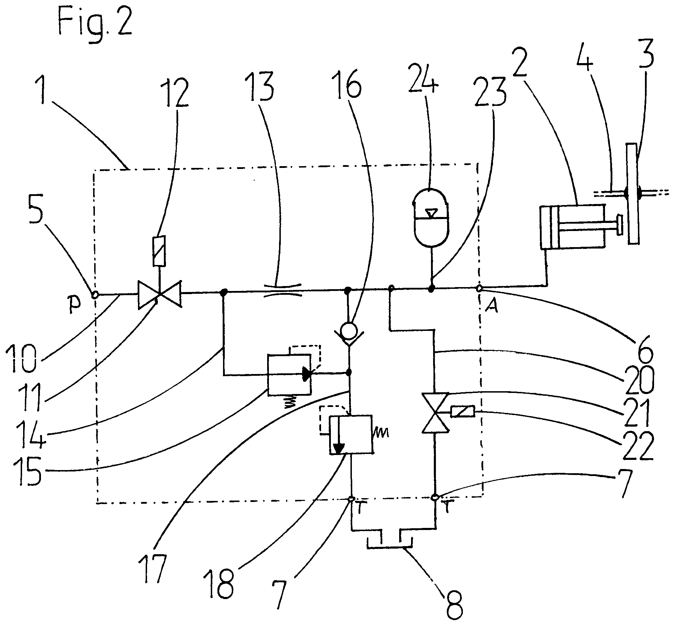

In Fig. 2 ist eine Alternativversion der hydraulischen Ansteuereinrichtung 1 gemäß Fig. 1 dargestellt. Im Unterschied zu der Ansteuereinrichtung 1 gemäß Fig. 1 handelt es sich bei dem Druckregelventil 15 um eines, das ausgangsseitig nicht dazu ausgelegt ist, dem maximalen Bremsdruck standzuhalten. Daher ist im weiteren Verlauf der Zweigleitung 14 vor der Einmündung in die Steuerleitung 10 ein Rückschlagventil 16 vorgesehen, das verhindert, dass ein durch die Drossel 13 weiter erhöhter Druck in der Steuerleitung 10 an den Ausgang des Druckregelventils 15 angelegt wird. Der Druck am Ausgang des Druckregelventils 15 verbleibt daher idealerweise auf dem Wert des Schließdrucks.

Für den Fall, dass ein Leckstrom durch das Rückschlagventil 16 vorhanden ist und auf diese Weise langsam der Druck an der Ausgangsseite des Druckregelventils 15 erhöht wird, zweigt zwischen dem Druckregelventil 15 und dem Rückschlagventil 16 eine Zweigentlastungsleitung 17 ab, in der ein Druckbegrenzungsventil 18 angeordnet ist, das sich bei Überschreiten eines zulässigen Sicherheitsdruckes des Druckregelventils 15 öffnet und durch Ablassen von Hydraulikflüssigkeit den Druck zwischen dem Druckregelventil 15 und dem Rückschlagventil 16 wieder auf das zulässige Maß herabführt. Die Zweigentlastungsleitung 17 führt in einem Anschluss 7 zu einem Tank 8. Das Druckbegrenzungsventil 18 ist im Normalzustand federvorgespannt in einer geschlossenen Stellung, d.h., es wird keine Hydraulikflüssigkeit durchgeleitet. Das Druckbegrenzungsventil 18 wird über eine gestrichelt dargestellte Steuerleitung mit dem eingangsseitig anliegenden Druck beaufschlagt. Wenn der an der Eingangsseite des Druckbegrenzungsventils 18 anliegende Druck einen Schwellwert übersteigt, wird das Druckbegrenzungsventil 18 entgegen der Federvorspannung in eine durchleitende Stellung bewegt, so dass Hydraulikflüssigkeit durch das Druckbegrenzungsventil 18 abfließen kann.

Die übrigen Komponenten der hydraulischen Ansteuereinrichtung 1 gemäß Fig. 2 entsprechen denen in Fig. 1.

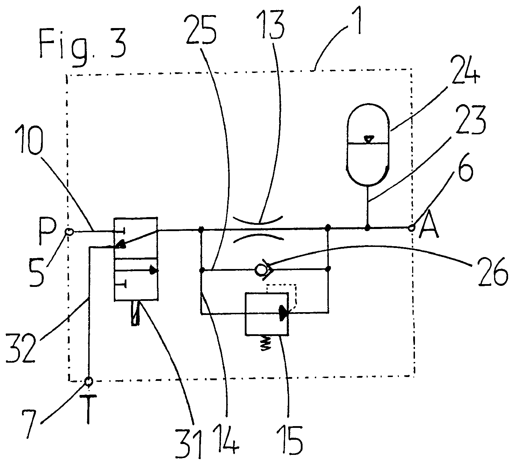

In Fig. 3 ist eine weitere erfindungsgemäße hydraulische Ansteuereinrichtung diagrammatisch schematisch dargestellt. Der Teil, der sich stromaufwärts der Abzweigung zwischen der Steuerleitung 10 und der Zweigleitung 14 befindet, umfasst anstelle eines steuerbaren Sperrventils 11 gemäß Fig. 1 und Fig. 2 in diesem Fall ein 3/2-Wege-Ventil 31, das in seiner federvorbelasteten und nicht aktivierten Stellung Hydraulikflüssigkeit vom Anschluss 5 für den hydraulischen Systemkreislauf P in die weitere Steuerleitung 10 durchlässt, während ein zweiter Eingang, der mit einer zweiten Entlastungsleitung 32 verbunden ist, die in einem Anschluss 7 für einen Tank T mündet, abgesperrt ist. Sobald ein Signal zum Schalten des 3/2-Wege-Ventils 31 anliegt, wird dieses in die zweite Stellung geschaltet, in der der stromabwärtige Teil der Steuerleitung 10 und sämtliche dahinter liegenden Komponenten mit der zweiten Entlastungsleitung 32 verbunden sind. Damit wird die hydraulische Ansteuereinrichtung stromabwärts des 3/2-Wege-Ventils 31 entlastet, ebenso wie der Bremszylinder 2. Die von dem hydraulischen Systemkreislauf kommende Steuerleitung 10 wird in dieser Schaltstellung im 3/2-Wege-Ventil terminiert. Eine Entlastung auf der anderen Seite der Drossel 13 und des Druckbegrenzungsventils 15 wie in Fig. 1 oder 2 entfällt.

Diese Art der Entlastung ist insbesondere dann vorteilhafterweise einsetzbar, wenn die Drossel 13 groß genug ist, dass eine Entleerung der Leitungen in der Ansteuereinrichtung 1 und im Bremszylinder 2 schnell genug erfolgen kann. Zusätzlich oder alternativ dazu ist in einer Überbrückungsleitung 25 eine Rückschlagventil 26 vorgesehen, das das Druckbegrenzungsventil 15 in Richtung zum Tank T überbrückt. Die Entleerung erfolgt somit schnell, unabhängig von der Größe der Drossel 13. Eine solche Überbrückung kann auch in dem Druckbegrenzungsventil 15 implementiert sein.

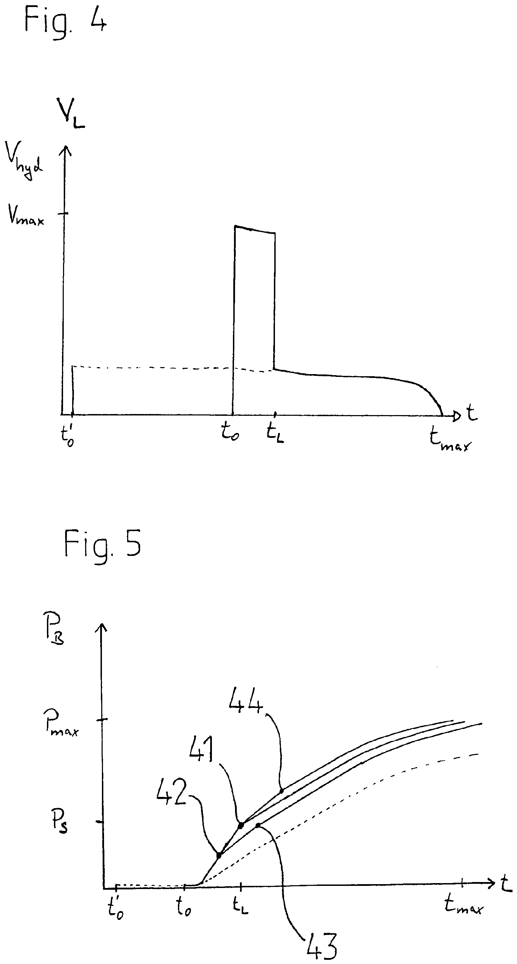

In Fig. 4 ist schematisch der zeitliche Verlauf des Volumenstroms an Hydraulikflüssigkeit beim Einleiten eines Bremsvorgangs dargestellt. Ein Bremssignal erfolgt zum Zeitpunkt t₀. Zu diesem Zeitpunkt wird, beispielsweise bei der hydraulischen Ansteuereinrichtung 1 gemäß Fig. 1, ein Sperrventil 11 geöffnet. Hydraulikflüssigkeit strömt durch das Sperrventil 11 und die Steuerleitung 10 sowohl durch die Drossel 13 als auch durch das geöffnete Druckregelventil 15. Der Volumenstrom ist somit sehr hoch und erreicht am Anfang einen Wert Vₘₐₓ. Da sich in der Ansteuereinrichtung 1 und dem Bremszylinder 2 hierbei ein gewisser Druck aufbaut, nimmt der Volumenstrom zunächst leicht ab.

Kurz vor dem Zeitpunkt t_{L} kontaktiert die Bremsbacke die Bremsscheibe 3, so dass sich der Druck in der Steuerleitung 10 sehr schnell stark erhöht. Dadurch wird der Schließdruck des Druckregelventils 15 überschritten, so dass dieses zum Zeitpunkt t_{L} geschlossen wird. Aufgrund des Schließens des Druckregelventils 15 fällt der Volumenstrom rapide auf einen Bruchteil seines vorherigen Werts, nämlich ungefähr einen Wert V_{L}, der dem Volumenstrom durch die Drossel 13 alleine entspricht.

Die Kurve beschreibt den Fall, in dem der Schließdruck des Druckregelventils 15 auf den gleichen Druck eingestellt ist wie der Öffnungsdruck bzw. Mindestspeicherdruck P_{Sp} des Speichers 24. Der Speicher 24 wird daher ebenfalls im Zeitpunkt t_{L} geöffnet. Aufgrund des weiter steigenden Drucks im Bremszylinder 2, in den dahin führenden Abschnitten der Steuerleitung 10 sowie im Speicher 24 nimmt der Volumenstrom im Folgenden weiter leicht ab, bis ein maximaler Bremsdruck erreicht ist. An dieser Stelle hört der Volumenstrom vollständig auf. Dieser Zeitpunkt ist mit tₘₐₓ gekennzeichnet.

Zum Vergleich ist gestrichelt der Verlauf des Volumenstroms dargestellt für den herkömmlichen Fall, dass eine Drossel 13 eingesetzt wird, die nicht durch ein Druckregelventil 15 überbrückt wird. In diesem Fall ist von einem Zeitpunkt t^{'}₀ an ein geringer Volumenstrom vorhanden. Die Flächen unter der gestrichelten Kurve, die ab dem Zeitpunkt t_{L} der durchgezogenen Linie folgt, und der durchgezogenen Kurve sind gleich. Bei der Einleitung des Bremsvorgangs ergibt sich somit erfindungsgemäß eine Zeitersparnis der Differenz t₀ - t^{'}₀.

Die in Fig. 4 dargestellte Kurve ist als Prinzipzeichnung zu verstehen, die lediglich das Prinzip darstellt, jedoch nicht maßstabsgetreu ist.

In den nicht dargestellten Fällen, dass der Mindestspeicherdruck den Schließdruck des Druckregelventils 25 übersteigt oder darunter liegt, ergibt sich eine allgemeine Abflachung der Kurve jeweils zu einem Zeitpunkt, in dem der Mindestspeicherdruck überschritten wird. Da die Gesamtmenge der Hydraulikflüssigkeit im Zeitpunkt tₘₐₓ lediglich vom maximalen Bremsdruck und dem im System vorhandenen Volumen abhängig ist, ist die Integralfläche unter den entsprechenden Kurven im Diagramm gemäß Fig. 4 gleich, unabhängig vom Mindestspeicherdruck P_{Sp}.

In Fig. 5 ist schematisch, und ebenfalls lediglich als Prinzipdarstellung nicht maßstabsgetreu, der Druckverlauf des Bremsdrucks P_{B} als Funktion der Zeit dargestellt.

Zum Vergleich ist der Druckverlauf eines bekannten Hydrauliksystems gestrichelt dargestellt, im dem Hydraulikflüssigkeit ausschließlich über eine Drossel zu einem Bremszylinder strömt. Ein Bremssignal wird zum Zeitpunkt t^{'}₀ erzeugt. Aufgrund des stark begrenzten Volumenstroms vergeht eine vergleichsweise lange Zeitdauer, bis eine Bremsbacke eine Bremsscheibe kontaktiert und der Druck ansteigt. Aufgrund des weiterhin gedrosselten Volumenstroms steigt der Bremsdruck auch nur langsam an.

Im Falle des erfindungsgemäßen Hydrauliksystems werden drei Fälle dargestellt. In einem ersten Fall stimmt der Mindestspeicherdruck P_{Sp} mit dem Schließdruck des Druckregelventils 15 überein. Zum Zeitpunkt t₀ wird ein Bremssignal erzeugt. Zu diesem Zeitpunkt wird das Sperrventil 11 geöffnet und Hydraulikflüssigkeit strömt durch das Sperrventil 11 in die Steuerleitung 10 und die nachfolgenden Komponenten ein. Da dies mit einem großen Volumenstrom sowohl durch die Drossel 13 als auch durch das Druckregelventil 15 geschieht, ergibt sich ein schneller Druckaufbau bis zu einem Schließdruck P_{S} des Druckregelventils 15, der zum Zeitpunkt t_{L} an der Stelle 41 erreicht wird.

Zum Zeitpunkt t_{L} ist die Bremsscheibe 3 durch den Bremszylinder 2 bzw. durch die betätigte Bremsbacke erst leicht kontaktiert. Es ist jedoch noch kein starkes Bremsmoment aufgebaut worden, das das Getriebe bzw. die Windenergieanlage stark belasten würde. Danach flacht die Kurve des Druckaufbaus stark ab, da sich das Druckregelventil 15 schließt und der Speicher 24 öffnet. So treten auch in diesem Verlauf keine unzulässig hohen Belastungen auf.

Im zweiten Fall, in dem der Mindestspeicherdruck unterhalb des Schließdrucks des Druckregelventils 15 liegt, öffnet sich der Speicher 24 bereits im Punkt 42, wonach der Verlauf der Kurve abflacht und unterhalb derjenigen des ersten Falles verläuft. Der Schließdruck des Druckregelventils 15 im Punkt 43 wird ebenfalls erst später erreicht, wonach die Kurve weiter abflacht.

Im dritten Fall übersteigt der Mindestspeicherdruck den Schließdruck des Druckregelventils 15. Der Druckanstieg entspricht bis zum Punkt 41 zum Zeitpunkt t_{L} demjenigen der ersten Kurve. Danach flacht die Kurve aufgrund der Schließung des Druckregelventils 15 ab. Da der Speicher 24 aber noch nicht geöffnet ist, ist die Abflachung geringer als im ersten Fall. Erst im Punkt 44 ist der Mindestspeicherdruck erreicht, der Speicher wird geöffnet und die Kurve flacht weiter ab.

Im ersten Fall wird somit ein mittlerer, im zweiten Fall ein weicherer und im dritten Fall ein härterer Bremsverlauf eingestellt..

Im Vergleich mit dem gestrichelten Kurvenverlauf ohne Druckregelventil 15 ergibt sich ein Unterschied zwischen t'₀ und t₀ als die Zeit, die an Totzeit erspart ist. Es kann sich hierbei um mehrere Sekunden handeln. Dies führt dazu, dass die Reaktion mit der erfindungsgemäßen Ansteuereinrichtung 1 auch bei Nothaltebetätigung spontan ist. Außerdem entfällt das Risiko, dass sich Bremsen langsamer verhalten als in den Auslegungsberechnungen zugrunde gelegt. Damit sind unerwartete Lasten ebenfalls vermieden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen.

### Bezugszeichenliste

- 1: Hydraulische Ansteuereinrichtung
- 2: Bremszylinder
- 3: Bremsscheibe
- 4: Welle
- 5: Anschluss für hydraulischen Systemkreislauf
- 6: Anschluss für hydraulische Bremszylinder
- 7: Anschluss für Tank
- 8: Tank
- 10: Steuerleitung
- 11: Sperrventil
- 12: Steuerspule
- 13: Drossel
- 14: Zweigleitung
- 15: Druckregelventil
- 16: Rückschlagventil
- 17: Zweigentlastungsleitung
- 18: Druckbegrenzungsventil
- 20: erste Entlastungsleitung
- 21: Sperrventil
- 22: Steuerspule
- 23: Stichleitung
- 24: Speicher mit Gasspannvorrichtung
- 25: Überbrückungsleitung
- 26: Rückschlagventil
- 31: 3/2-Wege-Ventil
- 32: zweite Entlastungsleitung
- 41: P_{S} = P_{Sp}
- 42: P_{Sp}, wenn P_{S} > P_{Sp}
- 43: P_{S}, wenn P_{S} > P_{Sp}
- 44: P_{Sp}, wenn P_{S} > P_{Sp}
- A: Arbeitskreislauf
- P: Systemkreislauf
- P_{B}: Bremsdruck
- P_{S}: Schließdruck
- P_{Sp}: Mindestspeicherdruck
- Pₘₐₓ: maximaler Bremsdruck
- T: Tank
- t₀, t₀': Startzeit
- t_{L}: Zeitpunkt Erreichen Schließdruck
- tₘₐₓ: Zeitpunkt Erreichen maximaler Bremsdruck
- V_{hyd}: Volumenstrom Hydraulikflüssigkeit
- V_{L}: gedrosselter Volumenstrom
- Vₘₐₓ: Volumenstrom durch Drossel und Zweigleitung

## Patentansprüche

1. Hydraulische Ansteuereinrichtung (1) für eine Bremseinrichtung einer Windenergieanlage, umfassend eine hydraulische Steuerleitung (10), die von einem Anschluss (5) für einen hydraulischen Systemkreislauf (P) einer Windenergieanlage bis zu einem Anschluss (6) für wenigstens einen Bremszylinder (2) einer Bremseinrichtung verläuft, wobei in der Steuerleitung (10) wenigstens eine Drossel (13) oder Blende angeordnet ist, **dadurch gekennzeichnet, dass** wenigstens eine Zweigleitung (14) mit einem Druckregelglied (15) vorgesehen ist, die die Drossel (13) oder Blende überbrückend in Druckaufbaurichtung auf den wenigstens einen Bremszylinder (2) zu stromaufwärts der Drossel (13) oder Blende von der Steuerleitung (10) abzweigt und stromabwärts der Drossel (13) oder Blende wieder in die Steuerleitung (10) einmündet, wobei das bei niedrigem ausgangsseitig anliegendem Druck geöffnete Druckregelglied (15) sich schließt, wenn der ausgangsseitig des Druckregelglieds (15) am Druckregelglied (15) in dem stromabwärtigen Teil der Zweigleitung (14) anliegende Druck einen voreingestellten oder voreinstellbaren Schließdruck (P_{S}) übersteigt, wobei das zur Drossel (13) oder zur Blende parallel geschaltete Druckregelglied (15) nach Anlegen eines Bremsbefehls bis zum Erlangen eines Schließdrucks einen erheblich höheren Volumenstrom an Hydraulikflüssigkeit zum Druckaufbau am Bremszylinder (2) als die Drossel (13) oder Blende zulässt.

2. Hydraulische Ansteuereinrichtung (1) nach Anspruch 1, **dadurch gekennzeichnet, dass** mehrere parallel geführte Zweigleitungen (14) mit mehreren Druckregelgliedern (15) vorgesehen sind, die auf jeweils gleiche oder verschiedene Schließdrücke (P_{S}) voreingestellt oder einstellbar sind.

3. Hydraulische Ansteuereinrichtung (1) nach Anspruch 1 oder 2, **dadurch gekennzeichnet, dass** das wenigstens eine Druckregelglied (15) als Druckregelventil (15) oder als gesteuertes Mehrwegeventil, insbesondere 2/2-Wege-Ventil, dessen Öffnungszustand sich bei Über- oder Unterschreiten des Schließdrucks verändert, als Druckminderungsventil oder als Proportionalventil ausgebildet ist, dessen Öffnung in Abhängigkeit des ausgangsseitig am Druckregelglied (15) anliegenden Drucks über einen voreingestellten oder einstellbaren Druckbereich bis zum Erreichen des Schließdrucks (P_{S}) geschlossen wird.

4. Hydraulische Ansteuereinrichtung (1) nach einem der Ansprüche 1 bis 3, **dadurch gekennzeichnet, dass** die Steuerleitung (10) stromaufwärts der stromaufwärtigen Abzweigung der Zweigleitung (14) mittels eines steuerbaren Sperrglieds (11, 31) absperrbar ist.

5. Hydraulische Ansteuereinrichtung (1) nach einem der Ansprüche 1 bis 4, **dadurch gekennzeichnet, dass** stromabwärts der stromabwärtigen Verbindung der Zweigleitung (14) mit der Steuerleitung (10) eine erste Entlastungsleitung (20) mit einem Entlastungsglied (21) abzweigt, wobei das Entlastungsglied (21) als steuerbares Sperrventil (21), als Mehrwegeventil, insbesondere 2/2-Wege-Ventil, als Druckbegrenzungsventil, als Überdruckventil oder als Sicherheitsventil ausgebildet ist.

6. Hydraulische Ansteuereinrichtung (1) nach einem der Ansprüche 1 bis 3, **dadurch gekennzeichnet, dass** in der Steuerleitung (10) stromaufwärts der stromaufwärtigen Abzweigung der Zweigleitung (14) ein Mehrwegeventil, insbesondere ein 3/2-Wege-Ventil (31), angeordnet ist, mittels dessen der stromabwärtige Teil der Steuerleitung (10) schaltbar wechselweise mit dem Anschluss (5) für einen hydraulischen Systemkreislauf (P) und mit einer zweiten Entlastungsleitung (32) verbindbar ist.

7. Hydraulische Ansteuereinrichtung (1) nach einem der Ansprüche 1 bis 6, **dadurch gekennzeichnet, dass** stromabwärts der stromabwärtigen Verbindung der Zweigleitung (14) mit der Steuerleitung (10) eine Stichleitung (23) von der Steuerleitung (10) zu einem Speicher (24) abzweigt, der insbesondere eine Gasspannvorrichtung aufweist, wobei der Speicher (24) befüllt oder entleert wird, solange der in der Stichleitung (23) am Speicher (24) anliegende Druck einen Mindestspeicherdruck (P_{Sp}) überschreitet und der Speicher (24) inaktiv ist, wenn der Mindestspeicherdruck (P_{Sp}) in der Stichleitung (23) unterschritten wird.

8. Hydraulische Ansteuereinrichtung (1) nach einem der Ansprüche 1 bis 7, **dadurch gekennzeichnet, dass** die Zweigleitung (14) stromabwärts des Druckregelglieds (15) ein Schutzglied (16) in Form eines in Druckaufbaurichtung sich öffnenden Rückschlagventils (16) oder eines steuerbaren Sperrglieds aufweist, wobei das Schutzglied den Durchfluss sperrt, wenn am stromabwärtigen Ausgang des Druckregelglieds (15) ein Druck anliegt, der einen Sicherheitsdruck, für den das Druckregelglied (15) ausgelegt ist, überschreitet, oder wenn der stromabwärts des Schutzglieds (16) herrschende Druck den stromaufwärts des Schutzglieds (16) herrschenden Druck überschreitet.

9. Hydraulische Ansteuereinrichtung (1) nach Anspruch 8, **dadurch gekennzeichnet, dass** von der Zweigleitung (14) zwischen dem Druckregelglied (15) und dem Schutzglied (16) eine Zweigentlastungsleitung (17) mit einem Druckbegrenzungsglied (18) mit voreingestelltem oder einstellbarem Grenzdruck abzweigt, wobei das Druckbegrenzungsglied (18) als federvorbelastetes oder gesteuertes in Druckentlastungsrichtung sich öffnendes Rückschlagventil, als voreingestelltes, einstellbares oder steuerbares Druckbegrenzungsventil (18), als Überdruck- oder Sicherheitsventil oder als steuerbares Sperrventil oder Mehrwegeventil, insbesondere 2/2-WegeVentil, ausgebildet ist.

10. Hydraulische Ansteuereinrichtung (1) nach einem der Ansprüche 1 bis 9, **dadurch gekennzeichnet, dass** ein entgegen der Druckaufbaurichtung öffnendes Rückschlagventil (26) vorgesehen ist, das die Drossel (13) und das Druckregelventil (15) überbrückt.

11. Hydraulische Bremseinrichtung einer Windenergieanlage mit wenigstens einem hydraulisch betätigbaren Bremszylinder und einer hydraulischen Ansteuereinrichtung (1) nach einem der Ansprüche 1 bis 10.

12. Windenergieanlage mit einer hydraulischen Bremseinrichtung nach Anspruch 11.

13. Verfahren zum Bremsen einer Welle (4) einer Windenergieanlage mittels wenigstens eines Bremszylinders (2), der bei Anlegen eines hydraulischen Drucks von einer Offenstellung in eine Bremsstellung bringbar ist, wobei bei Einleiten eines Bremsvorganges und niedrigem am Bremszylinder (2) anliegenden hydraulischen Druck (P_{B}) der Druckaufbau am Bremszylinder (2) in einer hydraulischen Ansteuereinrichtung (1) nach einem der Ansprüche 1 bis 11 mit einem hohen Volumenstrom an Hydraulikflüssigkeit über eine Drossel (13) oder Blende und ein zur Drossel (13) oder Blende der Ansteuereinrichtung (1) parallel geschaltetes Druckregelglied (15) der Ansteuereinrichtung (1) erfolgt, bis ein Schließdruck (P_{S}) erreicht ist, wobei nach Überschreiten des Schließdrucks (P_{S}) das Druckregelglied (15) geschlossen wird und der Druckaufbau am Bremszylinder (2) bis zum Erreichen eines maximalen Bremsdrucks (Pₘₐₓ) mit einem niedrigeren oder gedrosselten Volumenstrom (V_{L}) nur durch die Drossel (13) oder Blende erfolgt.

14. Verfahren nach Anspruch 13, **dadurch gekennzeichnet, dass** der Schließdruck (P_{S}) so gewählt ist, dass ein Bremsspalt zwischen einer Bremsbacke des Bremszylinders (2) und einer Bremsscheibe (3) überwunden ist, wenn der Schließdruck (P_{S}) erreicht ist, wobei ein bei Erreichen des Schließdrucks (P_{S}) erreichtes Bremsmoment und die dadurch erzielte Abbremsung eines Rotors der Windenergieanlage innerhalb vorgegebener Belastungsgrenzen der Windenergieanlage liegen.

15. Verfahren nach Anspruch 13 oder 14, **dadurch gekennzeichnet, dass** der Schließdruck (P_{S}) des Druckregelventils (15) und ein Mindestspeicherdruck (P_{Sp}) in Abhängigkeit voneinander mit einer vorgegebenen oder vorgebbaren Druckdifferenz voreingestellt wird oder eingestellt ist.

## Claims

1. A hydraulic control device (1) for a brake device of a wind turbine, comprising a hydraulic control line (10), which progresses from a connection (5) for a hydraulic system circuit (P) of a wind turbine up to a connection (6) for at least one brake cylinder (2) of a brake device, wherein at least one throttle (13) or baffle is arranged in the control line (10), **characterized in that** at least one branch line (14) with a pressure regulation element (15) is provided, which branches from the control line (10) upstream of the throttle (13) or baffle, relative to the pressure buildup direction, towards the at least one brake cylinder (2), bridging the throttle (13) or baffle, and flows back into the control line (10) downstream of the throttle (13) or baffle, wherein the pressure regulation element (15) opened in the case of low pressure applied on the output side closes when the pressure applied on the output side of the pressure regulation element (15) exceeds a preset or presettable closing pressure (Pₛ) on the pressure regulation element (15) in the downstream part of the branch line (14), wherein, after application of a brake command, the pressure regulation element (15) connected in parallel with the throttle (13) or with the baffle permits a considerably higher volume flow of hydraulic fluid for pressure buildup at the brake cylinder (2) than the throttle (13) or baffle, up until a closing pressure is achieved.

2. The hydraulic control device (1) according to claim 1, **characterized in that** several parallel-guided branch lines (14) are provided with several pressure regulation elements (15), which are preset or adjustable to the respective same or different closing pressures (Pₛ).

3. The hydraulic control device (1) according to claim 1 or 2, **characterized in that** the at least one pressure regulation element (15) is designed as a pressure regulation valve (15) or as a controlled manifold valve, in particular a 2/2-way valve, the opening state of which changes in the case of the exceedance or falling short of of the closing pressure, as a pressure reduction valve or as a proportional valve, the opening of which is closed depending on the pressure applied on the output side of the pressure regulation element (15) over a preset or adjustable pressure range up until the closing pressure (Pₛ) is reached.

4. The hydraulic control device (1) according to one of claims 1 to 3, **characterized in that** the control line (10) is blockable upstream of the upstream branch of the branch line (14) by means of a controllable blocking element (11, 31).

5. The hydraulic control device (1) according to one of claims 1 to 4, **characterized in that** a first pressure relief line (20) with a pressure relief element (21) branches off downstream of the downstream connection of the branch line (14) with the control line (10), wherein the pressure relief element (21) is designed as controllable blocking valve (21), as a manifold valve, in particular a 2/2-way valve, as a pressure control valve, as an excess pressure valve or as a safety valve.

6. The hydraulic control device (1) according to one of claims 1 to 3, **characterized in that** a manifold valve, in particular a 3/2-way valve (31), is arranged in the control line (10) upstream of the upstream branch of the branch line (14), by means of which the downstream part of the control line (10) is switchably connectable alternatingly with the connection (5) for a hydraulic system circuit (P) and with a second pressure relief line (32).

7. The hydraulic control device (1) according to one of claims 1 to 6, **characterized in that**, downstream of the downstream connection of the branch line (14) with the control line (10), a stub line (23) branches off from the control line (10) to a storage (24), which has in particular a gas tensioning apparatus, wherein the storage (24) is filled or emptied, as long as the pressure applied to the storage (24) in the stub line (23) exceeds a minimum storage pressure (P_{Sp}) and the storage (24) is inactive when the minimum storage pressure (P_{Sp}) is fallen short of in the stub line (23).

8. The hydraulic control device (1) according to one of claims 1 to 7, **characterized in that** the branch line (14) has a protective element (16) downstream of the pressure regulation element (15) in the form of a check valve (16) opening in the pressure buildup direction or of a controllable blocking element, wherein the protective element blocks the flow when pressure is applied to the downstream exit of the pressure regulation element (15), which exceeds a safety pressure, for which the pressure regulation element (15) is designed, or when the pressure prevailing downstream from the protective element (16) exceeds the pressure prevailing upstream from the protective element (16).

9. The hydraulic control device (1) according to claim 8, **characterized in that** a branch relief line (17) with a pressure control element (18) with preset or adjustable limit pressure branches off from the branch line (14) between the pressure regulation element (15) and the protective element (16), wherein the pressure control element (18) is designed as a spring-preloaded or controlled check valve opening in the pressure relief direction, as a preset, adjustable or controllable pressure control valve (18), as an excess pressure valve or as a safety valve or as a controllable blocking valve or manifold valve, in particular a 2/2-way valve.

10. The hydraulic control device (1) according to one of claims 1 to 9, **characterized in that** a check valve (26) opening counter to the pressure buildup direction is provided, which bridges the throttle (13) and the pressure regulation valve (15).

11. A hydraulic brake device of a wind turbine with at least one hydraulically actuatable brake cylinder and one hydraulic control device (1) according to one of claims 1 to 10.

12. A wind turbine with a hydraulic brake device according to claim 11.

13. A method for braking a shaft (4) of a wind turbine by means of at least one brake cylinder (2), which can be brought from an open position into a brake position when hydraulic pressure is applied, wherein, upon initiation of a braking process and low hydraulic pressure (P_{B}) applied to the brake cylinder (2), the pressure buildup at the brake cylinder (2) takes place in a hydraulic control device (1) according to one of claims 1 to 11 with a high volume flow of hydraulic fluid via a throttle (13) or baffle and a pressure regulation element (15) connected in parallel with the throttle (13) or baffle of the control device (1) until a closing pressure (P_{S}) is reached, wherein upon exceedance of the closing pressure (P_{S}), the pressure regulation element (15) is closed and the pressure buildup at the brake cylinder (2) takes place with a lower or throttled volume flow (V_{L}) only through the throttle (13) or baffle, up until a maximum braking pressure (Pₘₐₓ) is reached.

14. The method according to claim 13, **characterized in that** the closing pressure (P_{S}) is selected such that a brake gap between a brake shoe of the brake cylinder (2) and a brake disk (3) is overcome when the closing pressure (P_{S}) is reached, wherein a brake torque and the thereby achieved braking of a rotor of the wind turbine, which are reached when the closing pressure (P_{S}) is reached, lie within the specified load limits of the wind turbine.

15. The method according to claim 13 or 14, **characterized in that** the closing pressure (P_{S}) of the pressure regulation valve (15) and a minimum storage pressure (P_{Sp}) are preset or adjusted depending on each other with a specified or specifiable pressure difference.

## Revendications

1. Dispositif de commande hydraulique (1) pour un dispositif de freinage d'une éolienne, comprenant une conduite de commande hydraulique (10) s'étendant depuis un raccord (5) pour un circuit de système hydraulique (P) d'une éolienne jusqu'à un raccord (6) pour au moins un cylindre de freinage (2) d'un dispositif de freinage, au moins un étranglement (13) ou un diaphragme étant disposé dans la conduite de commande (10), **caractérisé en ce qu'**au moins une conduite de dérivation (14) est pourvue d'un organe de régulation de pression (15), qui dérive l'étranglement (13) ou le diaphragme avec un pontage dans la direction d'augmentation de la pression vers ledit au moins un cylindre de freinage (2) en amont de l'étranglement (13) ou du diaphragme de la conduite de commande (10) et débouche à nouveau dans la conduite de commande (10) en aval de l'étranglement (13) ou du diaphragme, l'organe de régulation de la pression (15), ouvert lorsqu'une faible pression est appliquée côté sortie, se fermant lorsque la pression appliquée sur l'organe de régulation de pression (15), du côté de la sortie de l'organe de régulation de pression (15), dans la partie aval de la conduite de dérivation (14), dépasse une pression de fermeture (Ps) pré-réglée ou pré-réglable, l'organe de régulation de pression (15), connecté parallèlement à l'étranglement (13) ou au diaphragme, autorisant, après l'application d'une instruction de freinage jusqu'à l'obtention d'une pression de fermeture, un débit volumique nettement supérieur de liquide hydraulique pour l'augmentation de la pression au niveau du cylindre de freinage (2) que l'étranglement (13) ou le diaphragme.

2. Dispositif de commande hydraulique (1) selon la revendication 1, **caractérisé en ce que** plusieurs conduites de dérivation parallèles guidées (14) sont prévues avec une pluralité d'éléments de régulation de pression (15), chaque pression de fermeture (P_{S}) étant préétablie ou étant réglable de façon à être identique ou différente.

3. Dispositif de commande hydraulique (1) selon la revendication 1 ou la revendication 2, **caractérisé en ce que** ledit au moins un organe de régulation de pression (15) est conçu en tant que soupape de régulation de pression (15) ou en tant que soupape commandée à plusieurs voies, notamment soupape à 2/2 voies dont l'état d'ouverture change lors d'un dépassement ou d'un passage en dessous de la pression de fermeture, en tant que soupape de réduction de pression ou en tant que soupape proportionnelle, dont l'ouverture est fermée en fonction de la pression appliquée du côté de la sortie à l'organe de régulation de pression (15) au-dessus d'une plage de pression pré-réglée ou pré-réglable jusqu'à l'obtention de la pression de fermeture (PS).

4. Dispositif de commande hydraulique (1) selon l'une quelconque des revendications 1 à 3, **caractérisé en ce que** la conduite de commande (10) peut être coupée en amont de la branche amont de la conduite de dérivation (14), au moyen d'un organe d'arrêt (11, 31) apte à être commandé.

5. Dispositif de commande hydraulique (1) selon l'une quelconque des revendications 1 à 4, **caractérisé en ce qu'**en aval de la connexion aval de la conduite de dérivation (14) avec la conduite de commande (10) se trouve une première conduite d'évacuation (20) dérivée, ayant un élément de décharge (21), l'élément de décharge (21) étant conçu en tant que soupape d'arrêt (21) réglable, en tant que soupape à plusieurs voies, en particulier une soupape à 2/2 voies, en tant que soupape de décharge de pression, en tant que soupape de surpression ou en tant que soupape de sécurité.

6. Dispositif de commande hydraulique (1) selon l'une quelconque des revendications 1 à 3, **caractérisé en ce que**, dans la conduite de commande (10) en amont de la branche amont de la conduite de dérivation (14), est disposée une vanne à plusieurs voies, notamment une soupape à 3/2 voies (31), au moyen de laquelle la partie aval de la conduite de commande (10) est commutable en alternance avec la connexion (5) d'un circuit hydraulique (P) et peut être reliée à un deuxième tuyau d'évacuation (32).

7. Dispositif de commande hydraulique (1) selon l'une quelconque des revendications 1 à 6, **caractérisé en ce qu'**en aval de la connexion en aval de la conduite de dérivation (14) avec la conduite de commande (10), une conduite de dérivation (23) bifurquant de la conduite de commande (10) comprend un accumulateur (24), en particulier comprend un dispositif à gaz, l'accumulateur (24) étant rempli ou vidé, tandis que, dans la conduite de dérivation (23), l'accumulateur (24) applique une pression supérieure à une pression minimale de stockage (PS_{P}) et l'accumulateur (24) est inactif si la pression minimale de stockage (PS_{P}) dans la conduite de dérivation (23) n'a pas été atteinte.

8. Dispositif de commande hydraulique (1) selon l'une quelconque des revendications 1 à 7, **caractérisé en ce que** la conduite de dérivation (14), en aval de l'organe de régulation de pression (15), comprend un élément de protection (16) notamment sous la forme d'une ouverture en direction du clapet anti-retour d'accumulation de pression (16) ou d'un organe d'arrêt commandé, l'élément de protection bloquant le débit lorsque la sortie aval de l'organe de régulation de pression (15) supporte une pression qui dépasse une pression de sécurité conçue pour l'organe de régulation de la pression (15) ou lorsque la pression régnant en amont de l'élément de protection (16) dépasse la pression régnant en aval de l'élément de protection (16).

9. Dispositif de commande hydraulique (1) selon la revendication 8, **caractérisé en ce qu'**à partir de la conduite de dérivation (14) entre l'organe de régulation de pression (15) et l'élément de protection (16) s'étend une conduite d'échappement (17) ayant un élément de limitation de pression (18) avec un préréglage ou une pression limite réglable, l'élément de limitation de pression (18) étant prévu sous la forme d'un ressort pré-chargé ou d'une ouverture en direction du clapet anti-retour d'accumulation de pression, préréglé, d'une soupape de limitation de pression (18) réglable ou pouvant être commandée, d'une soupape de surpression ou de sécurité ou d'une soupape d'arrêt commandé ou d'une soupape à plusieurs voies, notamment d'une soupape à 2/2 voies.

10. Dispositif de commande hydraulique (1) selon l'une quelconque des revendications 1 à 9, **caractérisé en ce qu'**un sens opposé au sens d'une accumulation de pression d'ouverture de clapet (26) est prévu, venant ponter l'étranglement (13) et l'organe de régulation de pression (15).

11. Dispositif de freinage hydraulique d'une éolienne comportant au moins un cylindre de freinage à actionnement hydraulique et un dispositif de commande hydraulique (1) selon l'une quelconque des revendications 1 à 10.

12. Éolienne avec un dispositif de freinage hydraulique selon la revendication 11.

13. Procédé pour le freinage d'un arbre (4) d'une éolienne au moyen d'au moins un cylindre de freinage (2), qui peut être amené, lors de l'application d'une pression hydraulique, d'une position ouverte vers une position de freinage, moyennant quoi, lors de l'initiation d'un processus de freinage et lorsqu'une pression hydraulique (Ps) est appliquée au niveau du cylindre de freinage (2), l'augmentation de pression au niveau du cylindre de freinage (2) dans un dispositif de commande hydraulique (1) selon l'une des revendications 1 à 11, avec un débit volumique élevé de liquide hydraulique, a lieu par l'intermédiaire d'un étranglement (13) ou d'un diaphragme et d'un organe de régulation de pression (15) branché parallèlement à l'étranglement (13) ou au diaphragme du dispositif de commande (1), du dispositif de commande (1), jusqu'à ce qu'une pression de fermeture (P_{S}) soit atteinte, moyennant quoi, après dépassement de la pression de fermeture (P_{S}), l'organe de commande de pression (15) est fermé et l'augmentation de pression au niveau du cylindre de freinage (2) a lieu jusqu'à l'obtention d'une pression de freinage maximale (Pₘₐₓ) avec un débit volumique (V_{L}) faible ou étranglé uniquement à travers l'étranglement (13) ou le diaphragme.

14. Procédé selon la revendication 13, **caractérisé en ce que** la pression de fermeture (P_{S}) est choisie de telle sorte qu'un écart de freinage entre un patin de frein du cylindre de freinage (2) et un disque de frein (3) est surmonté lorsque la pression de fermeture (P_{S}) est atteinte, un couple de freinage obtenu en conséquence par une pression de fermeture (P_{S}) et le taux de freinage obtenu par un rotor de l'éolienne étant dans les limites de charge prédéterminées de l'éolienne.

15. Procédé selon la revendication 13 ou la revendication 14, **caractérisé en ce que** la pression de fermeture (P_{S}) de la soupape de régulation (15) et une pression minimale de stockage (PSₚ) sont préréglées à une différence de pression interdépendante prédéterminée ou que l'on peut prédéterminer.
